# EUROPEAN PATENT APPLICATION

(11) **EP 4 745 219 A1**
(43) Date of publication of application: **20.05.2026**
(21) Application number: 25756105.0
(22) Date of filing: 11.04.2025
(51) Int. Cl.: C12C 7/00, A23L 2/38, C12C 12/00

(54) **METHOD FOR PRODUCING BEER-FLAVORED BEVERAGE**

(30) Priority: 24.07.2024 JP 2024118501; 21.02.2025 JP 2025027125
(71) Applicant: Sapporo Breweries Limited, Tokyo 150-8522 (JP)
(72) Inventor: KOSUGI, Takayuki, Shibuya-ku Tokyo 150-8522 (JP); NAGI OTANI, Yoshiki, Shibuya-ku Tokyo 150-8522 (JP); URATA, Kengo, Shibuya-ku Tokyo 150-8522 (JP)
(74) Representative: Handley, Matthew Edward
(86) International application number: PCT/JP2025/014476
(87) International publication number: WO 2026/023170

(57) **Abstract**

The present invention relates to a method for producing a beer-taste beverage, comprising at least a boiling process, wherein the boiling process comprises bubbling a gas through a raw material liquid while maintaining the temperature of the raw material liquid below its boiling point.

## Description

### Technical Field

The present invention relates to a method for producing a beer-taste beverage.

### Background Art

In the production of a beer-taste beverage, a boiling process is typically performed, in which a raw material liquid such as wort is held at a high temperature (typically, its boiling point) for a certain period of time. In the boiling process, by holding the raw material liquid at a high temperature (typically, its boiling point) for a certain period of time, various purposes are achieved, such as, for example, changes in hop bitter components and their dissolution into the wort, thermal coagulation of proteins, an increase in wort color, generation of reducing substances, sterilization of the wort, inactivation of enzymes, and volatilization of volatile substances (e.g., off-flavors). Therefore, the boiling process is an important process that affects the quality, such as the flavor and aroma, of the beer-taste beverage.

Conventionally, the boiling process has been carried out by raising the temperature of a raw material liquid such as wort to its boiling point and then continuing to boil the raw material liquid for 90 to 120 minutes while maintaining that temperature. For this reason, the boiling process is the process that consumes the most energy in the production of a beer-taste beverage. To date, several techniques have been proposed to reduce the energy required for the boiling process. For example, Patent Literature 1 discloses a method for producing a beer-taste beverage, comprising boiling a raw material liquid, which has been previously held in a non-boiling state at 93°C or higher, such that the evaporation rate of the liquid per unit time is 5 to 7%/hour.

### Citation List

### Patent Literature

Patent Literature 1: Japanese Unexamined Patent Publication No. 2015-216904

### Summary of Invention

### Technical Problem

In the boiling process, holding the raw material liquid in a non-boiling state can significantly reduce the energy required for producing a beer-taste beverage. On the other hand, as described above, the boiling process is an important process that affects the quality, such as the flavor and aroma, of the beer-taste beverage, and holding the raw material liquid in a non-boiling state has presented issues in terms of the quality of the resulting beer-taste beverage, such as insufficient volatilization of off-flavors.

Therefore, an object of the present invention is to provide a method for producing a beer-taste beverage that can produce a beer-taste beverage of sufficient quality while reducing the energy required for production.

### Solution to Problem

The present invention relates to a method for producing a beer-taste beverage, comprising at least a boiling process, wherein the boiling process comprises bubbling a gas through a raw material liquid while maintaining the temperature of the raw material liquid below its boiling point.

Since the production method according to the present invention comprises the above-described boiling process, it is possible to produce a beer-taste beverage of sufficient quality while reducing the energy required for production.

The gas may be at least one selected from the group consisting of an inert gas and air, and may be at least one selected from the group consisting of nitrogen gas, carbon dioxide gas, argon gas, helium gas, neon gas, and air.

A flow rate of the gas may be between 0.0003 Nm³/h and 0.0027 Nm³/h per 1 L of the raw material liquid.

In the production method, the boiling process may further comprise maintaining the temperature of the raw material liquid below its boiling point without bubbling a gas.

The raw material liquid may be, for example, wort.

The production method may further comprise, after the boiling process, a fermentation process of fermenting a pre-fermentation liquid with yeast.

In the production method, for example, the gas may be supplied into the raw material liquid through one or more holes having a diameter of 1.0 mm or less. When the diameter is within this range, the contact efficiency between the gas and the raw material liquid becomes higher, and aroma components related to off-flavors can be more reliably volatilized.

The present invention includes, for example, the following inventions.
[1] A method for producing a beer-taste beverage, comprising:
   at least a boiling process,
   wherein the boiling process comprises bubbling a gas through a raw material liquid while maintaining the temperature of the raw material liquid below its boiling point.
[2] The method according to [1], wherein the gas is at least one selected from the group consisting of an inert gas and air.
[3] The method according to [1] or [2], wherein the gas is at least one selected from the group consisting of nitrogen gas, carbon dioxide gas, argon gas, helium gas, neon gas, and air.
[4] The method according to any one of [1] to [3], wherein a flow rate of the gas is between 0.0003 Nm³/h and 0.0027 Nm³/h per 1 L of the raw material liquid.
[5] The method according to any one of [1] to [4], wherein the boiling process further comprises maintaining the temperature of the raw material liquid below its boiling point without bubbling a gas.
[6] The method according to any one of [1] to [5], wherein the raw material liquid is wort.
[7] The method according to any one of [1] to [6], further comprising, after the boiling process, a fermentation process of fermenting a pre-fermentation liquid with yeast.
[8] The method according to any one of [1] to [7], wherein the gas is supplied into the raw material liquid through one or more holes having a diameter of 1.0 mm or less.

### Advantageous Effects of Invention

According to the present invention, it is possible to provide a method for producing a beer-taste beverage that can produce a beer-taste beverage of sufficient quality while reducing the energy required for production.

### Description of Embodiments

Hereinafter, embodiments for carrying out the present invention will be described in detail. The present invention is not limited to the following embodiments.

In this specification, a "beer-taste beverage" means a beverage having a beer-like flavor and aroma. The beer-taste beverage is not limited to, but includes, for example, those classified as beer, happoshu (low-malt beer), and other effervescent alcoholic beverages as defined in Article 3 of the Japanese Liquor Tax Act (Act No. 6 of 1953). The beer-taste beverage can also include beverages that do not belong to effervescent alcoholic beverages under the Japanese Liquor Tax Act and soft drinks (e.g., non-alcoholic beer-taste beverages). The beer-taste beverage according to the present embodiment is not limited to those exemplified above.

The method for producing a beer-taste beverage according to the present embodiment comprises at least a boiling process. The boiling process is a process of holding a raw material liquid (e.g., wort) at a high temperature for a certain period of time to obtain a post-boiling liquid. Conventionally, the boiling process has been carried out by raising the temperature of a raw material liquid such as wort to its boiling point and then continuing to boil the raw material liquid for 90 to 120 minutes while maintaining that temperature. In contrast, in the production method according to the present embodiment, in the boiling process, instead of this boiling for a predetermined time, a gas is bubbled through the raw material liquid while maintaining the temperature of the raw material liquid below its boiling point. Therefore, the boiling process in the production method according to the present embodiment can also be referred to as a high-temperature bubbling process. The high-temperature bubbling process is a process equivalent to a conventional boiling process and can be carried out in the same manner as a conventional boiling process, except that boiling for a predetermined time is not performed and a gas is bubbled through the raw material liquid. In the following description, the boiling process in the production method according to the present embodiment will be described as the boiling process according to the present embodiment, but it can also be rephrased as a high-temperature bubbling process. Note that the boiling process according to the present embodiment does not exclude raising the temperature of the raw material liquid to its boiling point, and may include bringing the temperature of the raw material liquid to its boiling point, or holding the temperature of the raw material liquid at its boiling point for a certain period of time (a time shorter than the conventional boiling time).

The raw material liquid subjected to the boiling process according to the present embodiment has, for example, undergone a saccharification process described later, etc., and is typically at a lower temperature compared to the temperature during the boiling process. Therefore, a heating process in which the temperature of the raw material liquid is raised to the initial temperature of the raw material liquid in the boiling process is usually included before the start of the boiling process. Further, the raw material liquid after the boiling process (post-boiling liquid) is subjected to, for example, a fermentation process and/or a blending process described later, but the temperature required for the post-boiling liquid in these processes is typically lower than the temperature during the boiling process. Therefore, a cooling process in which the post-boiling liquid is cooled to the temperature required for the post-boiling liquid in the process following the boiling process is usually included after the end of the boiling process. The cooling may be performed by allowing the raw material liquid to radiate heat naturally in a non-heated state, or by cooling the raw material liquid via a cooling means in a non-heated state.

The boiling process according to the present embodiment includes a step of bubbling a gas through the raw material liquid while maintaining the temperature of the raw material liquid below its boiling point (hereinafter referred to as a "high-temperature bubbling step"). The boiling process according to the present embodiment may also include a step of maintaining the temperature of the raw material liquid below its boiling point without bubbling a gas (hereinafter referred to as a "high-temperature holding step"). The high-temperature holding step is not necessarily an essential step, but by performing this step, reactions that proceed at high temperatures (e.g., the conversion reaction from S-methylmethionine (SMM) to dimethyl sulfide (DMS)) can be sufficiently advanced. From this viewpoint, when the boiling process according to the present embodiment includes the high-temperature holding step, it is preferable to perform the high-temperature bubbling step after performing the high-temperature holding step. It is also possible to repeat the high-temperature holding step and the high-temperature bubbling step.

Typically, the discrimination threshold of DMS in a beer-taste beverage is considered to be 0.05 to 0.06 mg/L (50 to 60 µg/L) (Reference: "Basic Technology of Beer," edited by the Brewers Association of Japan, published by the Brewing Society of Japan). Since the production method according to the present embodiment comprises the boiling process according to the present embodiment, the DMS content in the resulting beer-taste beverage is sufficiently reduced. Therefore, the DMS content in the beer-taste beverage obtained by the production method according to the present embodiment may be, for example, less than 60 µg/L, may be 50 µg/L or less, may be 40 µg/L or less, may be 35 µg/L or less, may be 30 µg/L or less, may be 25 µg/L or less, and may be 20 µg/L or less.

The gas bubbled into the raw material liquid may be supplied into the raw material liquid, for example, through one or more holes having a diameter of 1.0 mm or less. In this specification, the diameter of a hole is defined as the diameter of a circle having the same area as the hole. The diameter of the hole may be, for example, 1.0 mm or less, may be 0.8 mm or less, may be 0.6 mm or less, may be 0.5 mm or less, may be 0.4 mm or less, and may be 0.3 mm or less. The diameter of the hole may also be, for example, 0.1 mm or more. When the diameter of the hole is within this range, the contact efficiency between the gas and the raw material liquid becomes higher, and aroma components related to off-flavors can be more reliably volatilized. The number of holes is not particularly limited and may be appropriately set so that the gas can be supplied sufficiently and uniformly into the raw material liquid. As an example of the number of holes, it may be, for example, 1 or more, 10 or more, or 100 or more per 1 m² of the horizontal area of the raw material liquid. Further, the amount of raw material liquid per hole may be 10 L or more, may be 50 L or more, and may be 100 L or more. The shape of the hole may be, for example, a substantially elliptical shape or a substantially circular shape, may be an elliptical shape or a circular shape, and may be a circular shape. The direction of supplying a gas with respect to the raw material liquid may be perpendicular to the liquid surface, may be horizontal, or may be at an angle in between.

The method for bubbling the gas through the raw material liquid is not particularly limited, but for example, an apparatus for supplying the gas may be used. The apparatus is composed of, for example, a supply unit for the gas to be bubbled (e.g., a gas cylinder, a gas production unit, an air (atmosphere) intake unit, etc.), a transport unit connected to the supply unit (e.g., a hose, etc.), and a bubbling unit connected to the transport unit for bubbling the gas through the raw material liquid. The bubbling unit may have, for example, a container having a hollow portion for receiving the gas from the transport unit, and one or more holes provided in the container. The container constituting the bubbling unit may be a part of the transport unit. The diameter, number, shape, etc., of the holes are as described above. Further, the bubbling unit may be disposed at the bottom of a container for accommodating the raw material liquid (e.g., a boiling kettle). The bubbling unit may be disposed in the raw material liquid, whereby the gas is supplied into the raw material liquid through the holes. The apparatus may further have a heating unit (e.g., a heater, etc.) for heating the gas to be bubbled. The heating unit may be provided in the middle of the transport unit, may be provided adjacent to the supply unit, or may be provided adjacent to the bubbling unit.

The heating process may be one that raises the temperature until it reaches the temperature of the raw material liquid set in the first step of the boiling process, i.e., the high-temperature bubbling step or the high-temperature holding step, and may also be one that raises the temperature until it reaches a temperature exceeding the set temperature of the raw material liquid.

The temperature of the raw material liquid when performing the high-temperature bubbling step may be below the boiling point. This eliminates or significantly reduces the need for energy to keep the raw material liquid boiling, thereby reducing the energy required for the production method according to the present embodiment. Furthermore, by being below the boiling point, the content of malty flavor components and/or hop-derived aroma components can be controlled, as will be described later. The lower limit of the temperature of the raw material liquid when performing the high-temperature bubbling step is not particularly limited, but from the viewpoint of obtaining a beer-taste beverage with more excellent quality, it may be, for example, 90.0°C or higher, on the premise that it is below the boiling point. From a similar viewpoint, the temperature of the raw material liquid when performing the high-temperature bubbling step may be, for example, 90.5°C or higher, 91.0°C or higher, 91.5°C or higher, 92.0°C or higher, 92.5°C or higher, 93.0°C or higher, 93.5°C or higher, 94.0°C or higher, 94.5°C or higher, 95.0°C or higher, 95.5°C or higher, 96.0°C or higher, 96.5°C or higher, 97.0°C or higher, 97.5°C or higher, 98.0°C or higher, 98.5°C or higher, 99.0°C or higher, or 99.5°C or higher, on the premise that it is below the boiling point. Note that the boiling point can vary depending on the composition of the raw material liquid, the atmospheric pressure of the environment where the raw material liquid is placed, etc., but since it is usually 100°C or higher, the temperature of the raw material liquid when performing the high-temperature bubbling step may be, for example, less than 100°C, on the premise that it is below the boiling point. The temperature of the raw material liquid being below the boiling point is synonymous with the raw material liquid being in a non-boiling state, except in the case of superheating.

The duration for performing the high-temperature bubbling step is not particularly limited and may be appropriately set according to the properties required for the resulting beer-taste beverage. A sufficient effect can be obtained by performing the high-temperature bubbling step for a duration comparable to the boiling time in a conventional boiling process. From this viewpoint, the duration for performing the high-temperature bubbling step may be, for example, between 30 minutes and 150 minutes, may be between 60 minutes and 120 minutes, may be between 70 minutes and 110 minutes, and may be between 80 minutes and 100 minutes.

In the high-temperature bubbling step, a gas is bubbled through the raw material liquid. By bubbling a gas through the raw material liquid, the volatilization of volatile substances such as off-flavors is promoted, and a beer-taste beverage of sufficient quality can be obtained. The type of gas to be bubbled is not particularly limited, but may be, for example, at least one selected from the group consisting of an inert gas and air. Examples of the inert gas include nitrogen gas, carbon dioxide gas, argon gas, helium gas, and neon gas.

The gas to be bubbled in the high-temperature bubbling step may be, for example, at least one selected from the group consisting of nitrogen gas, carbon dioxide gas, argon gas, helium gas, neon gas, and air. From the viewpoint of reducing CO₂ emission amount, the gas to be bubbled in the high-temperature bubbling step may be at least one selected from the group consisting of nitrogen gas, argon gas, helium gas, neon gas, and air. Furthermore, from the viewpoint that the interaction with the raw material liquid is small and the quality of the resulting beer-taste beverage becomes more excellent, the gas to be bubbled in the high-temperature bubbling step may be at least one selected from the group consisting of nitrogen gas, argon gas, helium gas, and neon gas. The type of gas to be bubbled in the high-temperature bubbling step can be appropriately selected according to the purpose.

Since the boiling process according to the present embodiment does not require energy input for boiling the raw material liquid (e.g., supply of steam for boiling the raw material liquid), it can be expected to reduce the carbon dioxide emission amount during boiling by up to about 99% compared to a conventional boiling process.

The flow rate of the gas to be bubbled in the high-temperature bubbling step is not particularly limited and may be, for example, between 0.0001 Nm³/h and 0.01 Nm³/h per 1 L of the raw material liquid. From the viewpoint that the effects of the present invention become more remarkable, the flow rate of the gas to be bubbled in the high-temperature bubbling step may be between 0.0002 Nm³/h and 0.004 Nm³/h, between 0.0003 Nm³/h and 0.003 Nm³/h, or between 0.0003 Nm³/h and 0.0027 Nm³/h, per 1 L of the raw material liquid.

From the viewpoint that the content of malty flavor components in the resulting beer-taste beverage becomes higher and the malty flavor can be felt more strongly, the flow rate of the gas to be bubbled in the high-temperature bubbling step may be between 0.0001 Nm³/h and 0.002 Nm³/h, between 0.00015 Nm³/h and 0.0015 Nm³/h, between 0.0002 Nm³/h and 0.001 Nm³/h, between 0.0003 Nm³/h and 0.0009 Nm³/h, between 0.0001 Nm³/h and 0.0004 Nm³/h, or between 0.0006 Nm³/h and 0.0012 Nm³/h, per 1 L of the raw material liquid.

Malty flavor components are aroma components characteristic of beers using special malts such as caramel malt and black malt, and specific examples include maltol, furaneol, 2,5-dimethylpyrazine, 2,6-dimethylpyrazine, 2,3-dimethylpyrazine, and guaiacol. The malty flavor components contained in a beer-taste beverage can be measured, for example, by a solid-phase microextraction-gas chromatography-mass spectrometry (SPME-GC-MS) method. In the SPME-GC-MS method, the measurement may be performed by a standard addition method using a calibration curve prepared by separately adding a standard solution to a sample.

Since the production method according to the present embodiment comprises the boiling process according to the present embodiment, the content of malty flavor components in the resulting beer-taste beverage can be controlled by controlling the flow rate of the gas bubbled in the high-temperature bubbling step. Among the malty flavor components, pyrazines (e.g., 2,5-dimethylpyrazine, 2,6-dimethylpyrazine, and 2,3-dimethylpyrazine) in particular show a remarkable change in content according to the gas flow rate. Therefore, the content of pyrazines in the resulting beer-taste beverage may be used as an indicator of the content of malty flavor components. The indicator may be, for example, the total content of one or more pyrazines selected from the group consisting of 2,5-dimethylpyrazine, 2,6-dimethylpyrazine, and 2,3-dimethylpyrazine. It may also be the total content of two or more pyrazines selected from the group consisting of 2,5-dimethylpyrazine, 2,6-dimethylpyrazine, and 2,3-dimethylpyrazine, or the total content of all three pyrazines: 2,5-dimethylpyrazine, 2,6-dimethylpyrazine, and 2,3-dimethylpyrazine.

When producing a light-colored beer-taste beverage with a color of 15° EBC or less, the total content of all three pyrazines, 2,5-dimethylpyrazine, 2,6-dimethylpyrazine, and 2,3-dimethylpyrazine, in the resulting beer-taste beverage may be, for example, 6.0 µg/L or more, 7.0 µg/L or more, 8.0 µg/L or more, 9.0 µg/L or more, 10.0 µg/L or more, 11.0 µg/L or more, or 12.0 µg/L or more, and may be 30.0 µg/L or less, 25.0 µg/L or less, 20.0 µg/L or less, or 15.0 µg/L or less.

When producing a dark-colored beer-taste beverage with a color of 80° EBC or more, the total content of all three pyrazines, 2,5-dimethylpyrazine, 2,6-dimethylpyrazine, and 2,3-dimethylpyrazine, in the resulting beer-taste beverage may be, for example, 40.0 µg/L or more, 45.0 µg/L or more, 50.0 µg/L or more, 55.0 µg/L or more, 60.0 µg/L or more, 65.0 µg/L or more, or 70.0 µg/L or more, and may be 100.0 µg/L or less, 90.0 µg/L or less, 80.0 µg/L or less, 70.0 µg/L or less, or 60.0 µg/L or less.

The total content of all three pyrazines, 2,5-dimethylpyrazine, 2,6-dimethylpyrazine, and 2,3-dimethylpyrazine, in the beer-taste beverage obtained by the production method according to the present embodiment may be, for example, 120% or more, 140% or more, 160% or more, 180% or more, or 200% or more, relative to the total content of said pyrazines in a beer-taste beverage obtained without performing the high-temperature bubbling step.

From the viewpoint that hop-derived aroma components in the resulting beer-taste beverage can be more sufficiently volatilized, the flow rate of the gas to be bubbled in the high-temperature bubbling step may be between0.001 Nm³/h and 0.01 Nm³/h, between 0.0015 Nm³/h and 0.005 Nm³/h, between 0.002 Nm³/h and 0.004 Nm³/h, or between 0.0025 Nm³/h and 0.0035 Nm³/h, per 1 L of the raw material liquid.

Hop-derived aroma components are aroma components that transfer from hops to the raw material liquid, and specific examples include humulene, myrcene, linalool, isobutyl isobutyrate, isoamyl isobutyrate, 2-methylbutyl isobutyrate, citronellol, and geraniol. The hop-derived aroma components contained in a beer-taste beverage can be measured, for example, by the SPME-GC-MS method.

From the viewpoint that hop-derived aroma components can be more emphasized in the resulting beer-taste beverage, the flow rate of the gas to be bubbled in the high-temperature bubbling step may be between 0.0001 Nm³/h and 0.002 Nm³/h, between 0.00015 Nm³/h and 0.0015 Nm³/h, between 0.0002 Nm³/h and 0.001 Nm³/h, between 0.0003 Nm³/h and 0.0009 Nm³/h, between 0.0001 Nm³/h and 0.0004 Nm³/h, or between 0.0006 Nm³/h and 0.0012 Nm³/h, per 1 L of the raw material liquid.

Since the production method according to the present embodiment comprises the boiling process according to the present embodiment, the content of hop-derived aroma components in the resulting beer-taste beverage can be controlled by controlling the flow rate of the gas bubbled in the high-temperature bubbling step. Among the hop-derived aroma components, linalool, citronellol, and geraniol in particular show a remarkable change in content according to the gas flow rate. Therefore, the content of linalool, citronellol, and geraniol in the resulting beer-taste beverage may be used as an indicator of the content of hop-derived aroma components. The indicator may be, for example, the total content of one or more aroma components selected from the group consisting of linalool, citronellol, and geraniol. It may also be the total content of two or more aroma components selected from the group consisting of linalool, citronellol, and geraniol, or the total content of all three aroma components: linalool, citronellol, and geraniol.

When hop-derived aroma components are more sufficiently volatilized by controlling the flow rate of the gas bubbled in the high-temperature bubbling step, the total content of all three aroma components, linalool, citronellol, and geraniol, in the resulting beer-taste beverage may be, for example, 15.0 µg/L or less, 14.0 µg/L or less, 13.0 µg/L or less, 12.0 µg/L or less, or 11.0 µg/L or less, and may be 3.0 µg/L or more, 4.0 µg/L or more, 5.0 µg/L or more, 6.0 µg/L or more, 7.0 µg/L or more, 8.0 µg/L or more, 9.0 µg/L or more, or 10.0 µg/L or more.

When hop-derived aroma components are more emphasized by controlling the flow rate of the gas bubbled in the high-temperature bubbling step, the total content of all three aroma components, linalool, citronellol, and geraniol, in the resulting beer-taste beverage may be, for example, 11.0 µg/L or more, 12.0 µg/L or more, 13.0 µg/L or more, 14.0 µg/L or more, 15.0 µg/L or more, 20.0 µg/L or more, 30.0 µg/L or more, 40.0 µg/L or more, or 50.0 µg/L or more.

When hop-derived aroma components are more emphasized and DMS is reduced to a preferable range by controlling the flow rate of the gas bubbled in the high-temperature bubbling step, the ratio of the total content (unit: µg/L) of all three aroma components, linalool, citronellol, and geraniol, to the content of DMS (unit: µg/L) in the resulting beer-taste beverage may be, for example, 1.1 or more, 1.2 or more, 1.3 or more, 1.4 or more, 1.5 or more, 1.6 or more, 1.7 or more, 1.8 or more, 1.9 or more, 2.0 or more, 3.0 or more, 4.0 or more, or 5.0 or more.

Among the hop-derived aroma components, isobutyl isobutyrate, isoamyl isobutyrate, and 2-methylbutyl isobutyrate also show a remarkable change in content according to the gas flow rate. Therefore, the content of isobutyl isobutyrate, isoamyl isobutyrate, and 2-methylbutyl isobutyrate in the resulting beer-taste beverage may be used as an indicator of the content of hop-derived aroma components. The indicator may be, for example, the total content of one or more aroma components selected from the group consisting of isobutyl isobutyrate, isoamyl isobutyrate, and 2-methylbutyl isobutyrate. It may also be the total content of two or more aroma components selected from the group consisting of isobutyl isobutyrate, isoamyl isobutyrate, and 2-methylbutyl isobutyrate, or the total content of all three aroma components: isobutyl isobutyrate, isoamyl isobutyrate, and 2-methylbutyl isobutyrate.

When hop-derived aroma components are more sufficiently volatilized by controlling the flow rate of the gas bubbled in the high-temperature bubbling step, the total content of all three aroma components, isobutyl isobutyrate, isoamyl isobutyrate, and 2-methylbutyl isobutyrate, in the resulting beer-taste beverage may be, for example, 2.00 µg/L or less, 1.90 µg/L or less, 1.80 µg/L or less, 1.70 µg/L or less, 1.60 µg/L or less, 1.50 µg/L or less, 1.40 µg/L or less, 1.30 µg/L or less, 1.20 µg/L or less, 1.10 µg/L or less, or 1.00 µg/L or less, and may be 0.10 µg/L or more, 0.20 µg/L or more, 0.30 µg/L or more, 0.40 µg/L or more, 0.50 µg/L or more, 0.60 µg/L or more, 0.70 µg/L or more, or 0.80 µg/L or more.

When hop-derived aroma components are more emphasized by controlling the flow rate of the gas bubbled in the high-temperature bubbling step, the total content of all three aroma components, isobutyl isobutyrate, isoamyl isobutyrate, and 2-methylbutyl isobutyrate, in the resulting beer-taste beverage may be, for example, 1.00 µg/L or more, 1.50 µg/L or more, 2.00 µg/L or more, 2.50 µg/L or more, 3.00 µg/L or more, 4.00 µg/L or more, or 5.00 µg/L or more.

When hop-derived aroma components are more emphasized and DMS is reduced to a preferable range by controlling the flow rate of the gas bubbled in the high-temperature bubbling step, the ratio of the total content (unit: µg/L) of all three aroma components, isobutyl isobutyrate, isoamyl isobutyrate, and 2-methylbutyl isobutyrate, to the content of DMS (unit: µg/L) in the resulting beer-taste beverage may be, for example, 0.05 or more, 0.10 or more, 0.15 or more, 0.20 or more, 0.25 or more, 0.30 or more, 0.35 or more, 0.40 or more, 0.45 or more, or 0.50 or more.

Note that the high-temperature bubbling step may include heating the raw material liquid as necessary to keep the temperature of the raw material liquid within a set temperature range. The heating of the raw material liquid can be carried out according to a conventional method. Specifically, it can be carried out, for example, by circulating steam or the like outside a container holding the raw material liquid. Further, in order to keep the temperature of the raw material liquid within the set temperature range, the gas to be bubbled may be preheated as necessary to raise the temperature of the gas. The preheating of the gas can be carried out, for example, by placing a heater in the gas flow path to heat the gas.

The temperature of the raw material liquid when performing the high-temperature holding step may be below the boiling point. This eliminates or significantly reduces the need for energy to keep the raw material liquid boiling, thereby reducing the energy required for the production method according to the present embodiment. The lower limit of the temperature of the raw material liquid when performing the high-temperature holding step is not particularly limited, but from the viewpoint of obtaining a beer-taste beverage with more excellent quality, it may be, for example, 90.0°C or higher, on the premise that it is below the boiling point. From a similar viewpoint, the temperature of the raw material liquid when performing the high-temperature holding step may be, for example, 90.5°C or higher, 91.0°C or higher, 91.5°C or higher, 92.0°C or higher, 92.5°C or higher, 93.0°C or higher, 93.5°C or higher, 94.0°C or higher, 94.5°C or higher, 95.0°C or higher, 95.5°C or higher, 96.0°C or higher, 96.5°C or higher, 97.0°C or higher, 97.5°C or higher, 98.0°C or higher, 98.5°C or higher, 99.0°C or higher, or 99.5°C or higher, on the premise that it is below the boiling point.

The duration for performing the high-temperature holding step is not particularly limited, and may be, for example, 70 minutes or less. The duration for performing the high-temperature holding step may be, for example, 65 minutes or less, 60 minutes or less, 55 minutes or less, 50 minutes or less, or 45 minutes or less. The duration for performing the high-temperature holding step may also be, for example, 5 minutes or more, 10 minutes or more, 15 minutes or more, 20 minutes or more, 25 minutes or more, 30 minutes or more, 35 minutes or more, 40 minutes or more, or 45 minutes or more.

In the boiling process according to the present embodiment, the high-temperature holding step and the high-temperature bubbling step can also be performed repeatedly. The boiling process according to the present embodiment may start with the high-temperature holding step or the high-temperature bubbling step, and may end with the high-temperature holding step or the high-temperature bubbling step. However, ending with the high-temperature bubbling step can be expected to volatilize DMS more effectively. Specifically, the boiling process according to the present embodiment may be performed, for example, by carrying out the high-temperature holding step, the high-temperature bubbling step, the high-temperature holding step, and the high-temperature bubbling step in this order; or by carrying out the high-temperature bubbling step, the high-temperature holding step, the high-temperature bubbling step, and the high-temperature holding step in this order; or by carrying out the high-temperature bubbling step, the high-temperature holding step, the high-temperature bubbling step, the high-temperature holding step, and the high-temperature bubbling step in this order. The number of repetitions of the high-temperature holding step is not particularly limited and may be 2, 3, 4, 5, 6, 7, 8, 9, 10, or 11 or more times. The number of repetitions of the high-temperature bubbling step is also not particularly limited and may be 2, 3, 4, 5, 6, 7, 8, 9, 10, or 11 or more times. The number of repetitions of the high-temperature holding step and the number of repetitions of the high-temperature bubbling step may be the same or different.

The raw material liquid subjected to the boiling process according to the present embodiment may be a sugar-containing liquid. The sugar-containing liquid is a solution containing sugars that can be assimilated by yeast, and specific examples include wort and syrup.

Hops may be added to the raw material liquid subjected to the boiling process according to the present embodiment. As the hops to be added, for example, dried hops, hop pellets, and hop extract can be used. The hops may be a hop processed product such as rho-hop, hexa-hop, tetra-hop, or an isomerized hop extract. When adding hops, the timing of adding the hops is not particularly limited, but for example, hops may be added to the raw material liquid in the heating process, may be added immediately before the boiling process, may be added during the boiling process, or may be added after the boiling process. Alternatively, hops may be added only in the heating process, may be added only immediately before the boiling process, may not be added during the boiling process, or may not be added after the boiling process.

The raw material liquid subjected to the boiling process according to the present embodiment can be obtained, for example, through a saccharification process. The saccharification process is a process of mixing raw materials and water, and then performing saccharification of the raw materials. The saccharification process may include, for example, a step of charging raw materials and mashing water, then adjusting the temperature to 50 to 76°C and holding that temperature. In this step, for example, the temperature is held at 50 to 76°C for 1 to 200 minutes. This, for example, advances the saccharification of the raw materials and elutes soluble components, thereby obtaining a saccharified liquid containing components necessary for yeast metabolism.

The production method according to the present embodiment may further comprise a wort lautering process of lautering the saccharified liquid obtained in the saccharification process, after the saccharification process and before the boiling process. The sugar-containing liquid subjected to the boiling process according to the present embodiment may be the saccharified liquid obtained in the saccharification process, or may be a filtered saccharified liquid obtained in a wort lautering process of lautering the saccharified liquid.

The beer-taste beverage according to the present embodiment may or may not contain a cereal-derived raw material as a raw material. In this specification, a cereal-derived raw material refers to a cereal or a processed cereal product. Examples of the cereal include barley, wheat, rye, oats, adlay, and common oats. Examples of the processed cereal product include cereal extract, malt, and malt extract. Cereal extract is obtained by extracting cereal extract components containing sugars and nitrogen from cereal. Malt is obtained by germinating cereal. As the malt, a color malt (e.g., caramel malt, crystal malt, black malt, chocolate malt, coffee malt, etc.) produced by kilning or roasting at a relatively high temperature (e.g., about 120°C) to darken and toast it during malt production may be used, or a color malt may not be used. Malt extract is obtained by extracting extract components containing sugars and nitrogen from malt.

The beer-taste beverage according to the present embodiment may or may not contain raw materials other than cereal. Raw materials other than cereal may be, for example, plant-based raw materials such as grains like corn, rice, and sorghum; tubers like potatoes and sweet potatoes; and legumes like soybeans and peas.

The beer-taste beverage according to the present embodiment may or may not contain hops as a raw material. Hops include, for example, dried hops, hop pellets, and hop extract, and also include hop processed products such as rho-hop, hexa-hop, tetra-hop, and isomerized hop extract.

The beer-taste beverage according to the present embodiment may contain sugars as a raw material. Examples of sugars include liquid sugar and powdered sugars such as granulated sugar. When using sugars, the usage ratio of sugars (proportion in the raw materials other than water and hops) may be, for example, 10% by mass or more, 15% by mass or more, 20% by mass or more, 25% by mass or more, 30% by mass or more, 35% by mass or more, or 40% by mass or more. The usage ratio of sugars (proportion in the raw materials other than water and hops) may also be, for example, 50% by mass or less, 45% by mass or less, 40% by mass or less, 35% by mass or less, 30% by mass or less, 25% by mass or less, 20% by mass or less, 15% by mass or less, or 10% by mass or less.

The beer-taste beverage according to the present embodiment may contain other raw materials that are usually blended in beverages, such as bittering agents, coloring agents, sweeteners, high-intensity sweeteners, antioxidants, acidulants, flavorings, and salts. Examples of bittering agents include, in addition to the hops mentioned above, iso-alpha-acids, caffeine, gentian extract, peptides, theobromine, naringin, quassia extract, wormwood extract, and cinchona extract. Examples of coloring agents include caramel color, gardenia color, fruit juice color, vegetable color, and synthetic dyes. Examples of sweeteners include fructose-glucose liquid sugar, glucose, galactose, mannose, fructose, lactose, sucrose, maltose, glycogen, and starch. Examples of high-intensity sweeteners include neotame, acesulfame K, sucralose, saccharin, sodium saccharin, disodium glycyrrhizinate, cyclamate, dulcin, stevia, glycyrrhizin, thaumatin, monellin, aspartame, and alitame. Examples of antioxidants include vitamin C, vitamin E, and polyphenols. Examples of acidulants include phosphoric acid, lactic acid, DL-malic acid, citric acid, adipic acid, trisodium citrate, glucono delta-lactone, gluconic acid, potassium gluconate, sodium gluconate, succinic acid, monosodium succinate, disodium succinate, sodium acetate, DL-tartaric acid, L-tartaric acid, sodium DL-tartrate, sodium L-tartrate, sodium lactate, glacial acetic acid, fumaric acid, monosodium fumarate, and sodium DL-malate. Examples of salts include sodium chloride, monopotassium phosphate, monocalcium phosphate, ammonium phosphate, magnesium sulfate, calcium sulfate, potassium metabisulfite, calcium chloride, magnesium chloride, potassium nitrate, and ammonium sulfate. The timing of adding other raw materials can be appropriately set according to the type of the other raw material, and they may be added, for example, in the saccharification process, in a post-fermentation process, or in a blending process.

In the beer-taste beverage according to the present embodiment, the malt usage ratio (the proportion of malt in the raw materials other than water and hops) may be between 0% by mass and 100% by mass. The malt usage ratio may be 10% by mass or more, 20% by mass or more, 30% by mass or more, 40% by mass or more, 50% by mass or more, 60% by mass or more, 65% by mass or more, 66% by mass or more, 67% by mass or more, 70% by mass or more, 80% by mass or more, 90% by mass or more, 95% by mass or more, 99% by mass or more, or 100% by mass. The malt usage ratio may also be less than 100% by mass, 95% by mass or less, 90% by mass or less, 80% by mass or less, 70% by mass or less, 60% by mass or less, or 50% by mass or less.

The production method according to the present embodiment may further comprise, after the boiling process, a fermentation process and/or a post-fermentation process, as necessary. Note that after the boiling process and before performing the next process (e.g., the fermentation process or the post-fermentation process), a cooling process is included. The cooling process is a process of cooling the post-boiling liquid until it reaches the temperature required for the post-boiling liquid in the next process.

The cooling process may include a removal step, as necessary. In the removal step, solid content (trub) in the post-boiling liquid is removed to obtain a purified liquid. The removal step can be carried out according to a conventional method. Specifically, the removal step can be performed, for example, by allowing the post-boiling liquid to stand still to precipitate insoluble solid content contained in the post-boiling liquid. The solid content includes, for example, thermally coagulated substances generated during the boiling process, and hop residue if hops were added during the boiling process. The removal step may be carried out in a whirlpool. In the removal step, the above-mentioned hops may be added to the post-boiling liquid. In the removal step, it can be said that the post-boiling liquid is consequently cooled by natural heat radiation. The cooling process may further include, after the removal step, a step of cooling the post-boiling liquid until it reaches the temperature required for the post-boiling liquid in the next process, as necessary. The cooling in the cooling step may be performed by allowing the post-boiling liquid to radiate heat naturally in a non-heated state, or by cooling the post-boiling liquid via a cooling means in a non-heated state.

The fermentation process is a process of fermenting a pre-fermentation liquid (the post-boiling liquid, or the purified liquid after the removal step) with yeast. The fermentation process can be carried out according to a conventional method. The fermentation process yields a post-fermentation liquid, which is obtained by fermenting the pre-fermentation liquid with yeast. Specifically, in the fermentation process, yeast is inoculated into the pre-fermentation liquid to cause fermentation, thereby obtaining a post-fermentation liquid containing alcohol produced by the yeast. The yeast used in the fermentation process may be a normal beer yeast.

The production method according to the present embodiment may include, as post-fermentation processes after the fermentation process, a process of storing and maturing the post-fermentation liquid (maturation process), and a process of filtering the post-fermentation liquid (filtration process). These post-fermentation processes can be carried out according to conventional methods. By performing the filtration process, insoluble solid content, yeast, and the like can be removed from the post-fermentation liquid.

In the production method according to the present embodiment, as another post-fermentation process, heating (sterilization) or the like may be performed on the post-fermentation liquid (or the post-fermentation liquid after the filtration process).

The method for producing a beer-taste beverage according to the present embodiment is not limited to a method of producing a beer-taste beverage through fermentation by yeast or the like as described above (a method by brewing), but may also be a method of producing a beer-taste beverage by mixing raw materials (a method by blending).

The method by blending includes, for example, a blending process of blending water and, if necessary, alcohol and/or other raw materials in a raw material tank. In the blending process, the post-boiling liquid (e.g., wort after boiling) obtained in the boiling process according to the present embodiment may be used as a part of the raw materials.

The method by blending may further include a filtration process of filtering a mixed liquid obtained by mixing each component in the blending process, a first sterilization process of sterilizing the filtered liquid filtered in the filtration process, a filling process of filling the sterilized filtered liquid that has been sterilized in the first sterilization process into containers such as bottles, cans, or PET bottles, and a second sterilization process of sterilizing the filtered liquid filled in the containers in the filling process together with the containers.

In the blending process, the components may be mixed while being stirred by a stirrer or the like so that they are well mixed. The filtration process can be performed, for example, by a general filter or strainer. The first sterilization process may be performed by plate sterilization from the viewpoint of processing speed and the like, and is not limited thereto as long as a similar process can be performed. The filling process may be performed in a clean room where the cleanliness is maintained to a degree normally practiced in beverage production. The second sterilization process can be performed by heating the filtered liquid together with the container at a predetermined temperature for a predetermined time. The first or second sterilization process may be a non-heating sterilization process. Examples of the non-heating sterilization process include ultraviolet (UV) sterilization. It is also possible to perform aseptic filling without a sterilization process. When producing an effervescent beverage, carbonation may be performed, for example, before the filling process.

The beer-taste beverage according to the present embodiment may be an alcoholic beer-taste beverage with an alcohol content of 1.0 v/v% or more, or a non-alcoholic beer-taste beverage with an alcohol content of less than 1.0 v/v%. In this specification, unless otherwise specified, "alcohol" means ethanol.

When the beer-taste beverage according to the present embodiment is an alcoholic beer-taste beverage, the alcohol content is not particularly limited and may be, for example, 1.0 v/v% or more, 2.0 v/v% or more, 3.0 v/v% or more, 3.5 v/v% or more, 4.0 v/v% or more, 4.5 v/v% or more, 5.0 v/v% or more, 5.5 v/v% or more, 6.0 v/v% or more, or 6.5 v/v% or more. The alcohol content of the alcoholic beer-taste beverage may also be, for example, 20.0 v/v% or less, 15.0 v/v% or less, 10.0 v/v% or less, 9.0 v/v% or less, 8.0 v/v% or less, 7.0 v/v% or less, 6.5 v/v% or less, 6.0 v/v% or less, 5.5 v/v% or less, 5.0 v/v% or less, 4.5 v/v% or less, 4.0 v/v% or less, 3.5 v/v% or less, or 3.0 v/v% or less.

When the beer-taste beverage according to the present embodiment is a non-alcoholic beer-taste beverage, the alcohol content is not particularly limited, but may be less than 1.0 v/v%, and may be 0.9 v/v% or less, 0.8 v/v% or less, 0.7 v/v% or less, 0.6 v/v% or less, 0.5 v/v% or less, 0.4 v/v% or less, 0.3 v/v% or less, 0.2 v/v% or less, 0.1 v/v% or less, or less than 0.005 v/v% (0.00 v/v%). The alcohol content of the non-alcoholic beer-taste beverage may also be 0.1 v/v% or more, 0.2 v/v% or more, 0.3 v/v% or more, 0.4 v/v% or more, or 0.5 v/v% or more.

The alcohol content of the beer-taste beverage according to the present embodiment can be measured, for example, by the method described in "8.3.6 Beer, Alcohol (Alcolyzer Method)" or "8.3.7 Headspace GC-FID Method" of the Revised BCOJ Methods of Beer Analysis (published by the Brewing Society of Japan, edited by the International Technical Committee [Analysis Committee] of the Brewers Association of Japan, revised and enlarged in 2013).

The bitterness unit (BU) of the beer-taste beverage according to the present embodiment may be, for example, between 0.0 and 50.0. The BU of the beer-taste beverage according to the present embodiment may be, for example, 40.0 or less, 30.0 or less, 20.0 or less, or 15.0 or less, and may be 1.0 or more, 2.0 or more, 3.0 or more, 4.0 or more, 5.0 or more, 10.0 or more, 15.0 or more, 20.0 or more, or 25.0 or more. The bitterness unit of the beer-taste beverage according to the present embodiment can be measured by the method described in "8.15 Bitterness Value" of the Revised BCOJ Methods of Beer Analysis (published by the Brewing Society of Japan, edited by the International Technical Committee [Analysis Committee] of the Brewers Association of Japan, revised and enlarged in 2013). The bitterness unit of the beer-taste beverage according to the present embodiment can be appropriately set within the above range, for example, by adjusting the type and amount of raw materials used.

The color of the beer-taste beverage according to the present embodiment may be 3.0° EBC or more, 4.0° EBC or more, 5.0° EBC or more, 10.0° EBC or more, 20.0° EBC or more, 30.0° EBC or more, 40.0° EBC or more, 50.0° EBC or more, 60.0° EBC or more, 70.0° EBC or more, 80.0° EBC or more, or 90.0° EBC or more, and may be 150.0° EBC or less, 120.0° EBC or less, 100.0° EBC or less, 80.0° EBC or less, 60.0° EBC or less, 50.0° EBC or less, 40.0° EBC or less, or 30.0° EBC or less. The color of the beer-taste beverage according to the present embodiment can be measured by the method described in "8.8.2 Spectrophotometric Method" of the Revised BCOJ Methods of Beer Analysis (published by the Brewing Society of Japan, edited by the International Technical Committee [Analysis Committee] of the Brewers Association of Japan, revised and enlarged in 2013). The color of the beer-taste beverage according to the present embodiment can be appropriately set within the above range, for example, by adjusting the type and amount of raw materials used.

The beer-taste beverage according to the present embodiment may be a fermented beverage (fermented beer-taste beverage) or a non-fermented beverage (non-fermented beer-taste beverage). A fermented beverage is produced through fermentation by yeast or the like. A non-fermented beverage is produced without undergoing fermentation by yeast or the like. Note that non-fermented beverages also include beer-taste beverages produced without fermentation by yeast or the like, but by blending alcohol (e.g., distilled alcohol such as spirits or alcohol for raw material use).

The beer-taste beverage according to the present embodiment may be still or carbonated. Here, "still" means that the gas pressure at 20°C is less than 0.049 MPa (0.5 kg/cm²), and "carbonated" means that the gas pressure at 20°C is 0.049 MPa (0.5 kg/cm²) or more. When it is carbonated, the upper limit of the gas pressure may be about 0.294 MPa (3.0 kg/cm²), or may be about 0.25 MPa (2.55 kg/cm²).

The beer-taste beverage according to the present embodiment can be provided in a container. Any container that can be sealed may be used, and so-called can containers or keg containers made of metal (such as aluminum or steel) can be applied. The container can also be a glass container, a PET bottle container, a paper container, a pouch container, or the like. The capacity of the container is not particularly limited, and any currently available capacity can be applied. It is preferable to apply a metal container from the viewpoint that it can completely block gas, moisture, and light, and can maintain stable quality at room temperature for a long period.

### Examples

Hereinafter, the present invention will be described more specifically based on examples; however, the present invention is not limited to the following examples. In the following test examples, the boiling point of the raw material liquid was in all cases over 100°C.

### [Test Example 1: Production and Evaluation of Beer-Taste Beverage]

### (Test Example 1-1)

Using malt (malt usage ratio of 50% by mass or more), corn, starch, rice, and mashing water, production of a saccharified liquid (saccharification process) and lautering the saccharified liquid (wort lautering process) were carried out according to a conventional method to obtain a sugar-containing liquid. For the obtained sugar-containing liquid, a heating process and a boiling process were carried out as follows. Note that hops were added to the sugar-containing liquid immediately before the boiling process.

The raw material liquid (sugar-containing liquid) was transferred to a boiling kettle and heated until the temperature of the raw material liquid reached its boiling point (heating process). Heating was continued as is, and the temperature of the raw material liquid was maintained at the boiling point for 90 minutes (conventional boiling process).

For the obtained post-boiling liquid (sugar-containing liquid after boiling), heating was stopped according to a conventional method, and the raw material liquid was allowed to stand still to precipitate trub (removal step). Thereafter, the raw material liquid was cooled (cooling step), fermentation with yeast was performed (fermentation process), and a process of storing and maturing the post-fermentation liquid (maturation process) was carried out to obtain a beer-taste beverage of Test Example 1-1 (color 7.1° EBC, bitterness unit (BU) 19.8, pH 4.4, alcohol content 4.9 v/v%).

### (Test Example 1-2)

A beer-taste beverage of Test Example 1-2 (color 7.3° EBC, BU 15.8, pH 4.4, alcohol content 4.9 v/v%) was obtained in the same manner as in Test Example 1-1, except that the heating process and the boiling process were changed as follows.

The raw material liquid (sugar-containing liquid) was transferred to a boiling kettle and heated until the temperature of the raw material liquid reached 100°C (heating process). Heating was immediately stopped, and the temperature of the raw material liquid was maintained at 98°C or higher and less than 100°C for 60 minutes (high-temperature holding step). Note that during the high-temperature holding step, if the temperature of the raw material liquid fell below 98°C, it was heated again, and when it reached 100°C, heating was stopped, and the temperature of the raw material liquid was maintained at 98°C or higher and less than 100°C. Next, while maintaining the temperature of the raw material liquid at 95°C or higher and less than 100°C, nitrogen gas was bubbled through the raw material liquid at a flow rate of 0.0015 Nm³/h per 1 L of the raw material liquid (high-temperature bubbling step). The high-temperature bubbling step was carried out for 90 minutes. Note that during the high-temperature bubbling step, if the temperature of the raw material liquid fell below 95°C, it was heated again, and when it reached 100°C, heating was stopped, and the temperature of the raw material liquid was maintained at 95°C or higher and less than 100°C. Thereafter, the bubbling of nitrogen gas was stopped.

### (Test Example 1-3)

A beer-taste beverage of Test Example 1-3 (color 7.7° EBC, BU 15.3, pH 4.4, alcohol content 4.9 v/v%) was obtained in the same manner as in Test Example 1-2, except that air was bubbled instead of nitrogen gas in the high-temperature bubbling step.

### [Measurement of Color, Bitterness Unit (BU), and pH]

The color of the obtained beer-taste beverage was measured according to the method described in "8.8.2 Spectrophotometric Method" of the Revised BCOJ Methods of Beer Analysis (published by the Brewing Society of Japan, edited by the International Technical Committee

### [Analysis Committee] of the Brewers Association of Japan, revised and enlarged in 2013).

The bitterness unit (BU) of the obtained beer-taste beverage was measured according to the method described in "8.15 Bitterness Value" of the Revised BCOJ Methods of Beer Analysis (published by the Brewing Society of Japan, edited by the International Technical Committee [Analysis Committee] of the Brewers Association of Japan, revised and enlarged in 2013).

The pH of the obtained beer-taste beverage was measured according to the method described in "8.7 pH" of the Revised BCOJ Methods of Beer Analysis (published by the Brewing Society of Japan, edited by the International Technical Committee [Analysis Committee] of the Brewers Association of Japan, revised and enlarged in 2013).

The alcohol content of the obtained beer-taste beverage was measured according to the method described in "8.3.6 Beer, Alcohol (Alcolyzer Method)" or "8.3.7 Headspace GC-FID Method" of the Revised BCOJ Methods of Beer Analysis (published by the Brewing Society of Japan, edited by the International Technical Committee [Analysis Committee] of the Brewers Association of Japan, revised and enlarged in 2013).

### [Measurement of Aroma Component]

Hop-derived aroma components contained in the obtained beer-taste beverage were measured by the SPME-GC-MS method. Aroma components related to off-flavors (dimethyl sulfide, S-methylmethionine, dimethyl sulfoxide) were measured by the headspace GC-MS method. The results are shown in Table 1.

**[Table 1]**

| | Unit | Test Example 1-1 | Test Example 1-2 | Test Example 1-3 |
|---|---|---|---|---|
| | | Control | Bubbling (nitrogen gas) | Bubbling (air) |
| Humulene | µg/L | 0.09 | 0.23 | 0. 10 |
| Myrcene | µg/L | 0.15 | 0.99 | 0.63 |
| Linalool | µg/L | 1.43 | 6.48 | 4.16 |
| Isobutyl isobutyrate | µg/L | 0.03 | 1.42 | 1.08 |
| Isoamyl isobutyrate | µg/L | 0.06 | 0.65 | 0.63 |
| 2-Methylbutyl isobutyrate | µg/L | 0.28 | 4.83 | 4.66 |
| Dimethyl sulfide (DMS) | µg/L | 17.2 | 16.8 | 14.1 |
| S-methylmethionine (SMM) | µg/L | 42.3 | 42.1 | 37.2 |
| Dimethyl sulfoxide (DMSO) | µg/L | 553.3 | 496.9 | 518.7 |

As shown in Table 1, compared to the beer-taste beverage of Test Example 1-1 (control) in which a conventional boiling process was performed, the beer-taste beverages of Test Example 1-2 and Test Example 1-3, in which a boiling process including a high-temperature bubbling step of bubbling a gas (nitrogen gas or air) while maintaining the temperature below the boiling point and at a high temperature (95°C or higher and less than 100°C) was performed, had a higher content of hop-derived aroma components (from humulene to 2-methylbutyl isobutyrate), and the content of aroma components related to off-flavors (dimethyl sulfide, S-methylmethionine, dimethyl sulfoxide) was at a comparable level. Note that the content of aroma components related to off-flavors was below the threshold value in all cases. From the results shown in Table 1, it can be understood that by performing the high-temperature bubbling step instead of boiling, the hop-derived aroma components were enhanced, and the aroma components related to off-flavors could be sufficiently volatilized.

### [Test Example 2: Production and Evaluation of Beer-Taste Beverage]

### (Test Example 2-1)

Using malt (malt usage ratio of 50% by mass or more), corn, starch, rice, and mashing water, production of a saccharified liquid (saccharification process) and lautering the saccharified liquid (wort lautering process) were carried out according to a conventional method to obtain a sugar-containing liquid. For the obtained sugar-containing liquid, a heating process and a boiling process were carried out as follows. Note that hops were added to the sugar-containing liquid immediately before the boiling process.

The raw material liquid (sugar-containing liquid) was transferred to a boiling kettle and heated until the temperature of the raw material liquid reached its boiling point (heating process). Heating was continued as is, and the temperature of the raw material liquid was maintained at the boiling point for 90 minutes (conventional boiling process).

For the obtained post-boiling liquid (sugar-containing liquid after boiling), heating was stopped according to a conventional method, and the raw material liquid was allowed to stand still to precipitate trub (removal step). Thereafter, the raw material liquid was cooled (cooling step), fermentation with yeast was performed (fermentation process), and a process of storing and maturing the post-fermentation liquid (maturation process) was carried out to obtain a beer-taste beverage of Test Example 2-1 (color 7.8° EBC, BU 19.1, pH 4.3, alcohol content 4.9 v/v%).

### (Test Example 2-2)

A beer-taste beverage of Test Example 2-2 (color 8.1° EBC, BU 17.2, pH 4.3, alcohol content 4.9 v/v%) was obtained in the same manner as in Test Example 2-1, except that the heating process and the boiling process were changed as follows.

The raw material liquid (sugar-containing liquid) was transferred to a boiling kettle and heated until the temperature of the raw material liquid reached 100°C (heating process). Heating was immediately stopped, and the temperature of the raw material liquid was maintained at 98°C or higher and less than 100°C for 60 minutes (high-temperature holding step). Note that during the high-temperature holding step, if the temperature of the raw material liquid fell below 98°C, it was heated again, and when it reached 100°C, heating was stopped, and the temperature of the raw material liquid was maintained at 98°C or higher and less than 100°C. Next, while maintaining the temperature of the raw material liquid at 95°C or higher and less than 100°C, nitrogen gas was bubbled into the raw material liquid at a flow rate of 0.0010 Nm³/h per 1 L of the raw material liquid (high-temperature bubbling step). The high-temperature bubbling step was carried out for 90 minutes. Note that during the high-temperature bubbling step, if the temperature of the raw material liquid fell below 95°C, it was heated again, and when it reached 100°C, heating was stopped, and the temperature of the raw material liquid was maintained at 95°C or higher and less than 100°C. Thereafter, the bubbling of nitrogen gas was stopped.

### (Test Example 2-3)

A beer-taste beverage of Test Example 2-3 (color 8.4° EBC, BU 18.2, pH 4.3, alcohol content 4.9 v/v%) was obtained in the same manner as in Test Example 2-2, except that air was bubbled instead of nitrogen gas in the high-temperature bubbling step.

### [Measurement of Color, Bitterness Unit (BU), and pH]

The color, bitterness unit (BU), pH, and alcohol content of the obtained beer-taste beverage were measured in the same manner as in Test Example 1.

### [Measurement of Aroma Component]

Aroma components contained in the obtained beer-taste beverage were measured in the same manner as in Test Example 1. The results are shown in Table 2.

**[Table 2]**

| | Unit | Test Example 2-1 | Test Example 2-2 | Test Example 2-3 |
|---|---|---|---|---|
| | | Control | Bubbling (nitrogen gas) | Bubbling (air) |
| Humulene | µg/L | 0.03 | 0.07 | 0.08 |
| Myrcene | µg/L | 0.16 | 0.78 | 0.56 |
| Linalool | µg/L | 1.59 | 9.37 | 5.58 |
| Isobutyl isobutyrate | µg/L | 0.03 | 1.99 | 0.55 |
| Isoamyl isobutyrate | µg/L | 0.04 | 0.95 | 0.38 |
| 2-Methylbutyl isobutyrate | µg/L | 0.24 | 6.36 | 2.56 |
| Dimethyl sulfide (DMS) | µg/L | 25.2 | 26.6 | 19.6 |
| S-methylmethionine (SMM) | µg/L | 27.6 | 26.3 | 26.7 |
| Dimethyl sulfoxide (DMSO) | µg/L | 517.5 | 472.4 | 479.1 |

As shown in Table 2, compared to the beer-taste beverage of Test Example 2-1 (control) in which a conventional boiling process was performed, the beer-taste beverages of Test Example 2-2 and Test Example 2-3, in which a boiling process including a high-temperature bubbling step of bubbling a gas (nitrogen gas or air) while maintaining the temperature below the boiling point and at a high temperature (95°C or higher and less than 100°C) was performed, had a higher content of hop-derived aroma components (from humulene to 2-methylbutyl isobutyrate), and the content of aroma components related to off-flavors (dimethyl sulfide, S-methylmethionine, dimethyl sulfoxide) was at a comparable level. Note that the content of aroma components related to off-flavors was below the threshold value in all cases. From the results shown in Table 2, it can be understood that by performing the high-temperature bubbling step instead of boiling, the hop-derived aroma components were enhanced, and the aroma components related to off-flavors could be sufficiently volatilized.

### [Test Example 3: Production and Evaluation of Beer-Taste Beverage]

Test Example 3 was carried out on a larger scale than the other test examples. For this reason, in Test Example 3-2 and Test Example 3-3, the range of temperature change (temperature decrease) in the high-temperature holding step and the high-temperature bubbling step was small, and the temperature was maintained within the set range without reheating the raw material liquid.

### (Test Example 3-1)

Using malt (malt usage ratio of 50% by mass or more), corn, starch, rice, and mashing water, production of a saccharified liquid (saccharification process) and lautering the saccharified liquid (wort lautering process) were carried out according to a conventional method to obtain a sugar-containing liquid. For the obtained sugar-containing liquid, a heating process and a boiling process were carried out as follows. Note that hops were added to the sugar-containing liquid immediately before the boiling process.

The raw material liquid (sugar-containing liquid) was transferred to a boiling kettle and heated until the temperature of the raw material liquid reached its boiling point (heating process). Heating was continued as is, and the temperature of the raw material liquid was maintained at the boiling point for 90 minutes (conventional boiling process).

For the obtained post-boiling liquid (sugar-containing liquid after boiling), heating was stopped according to a conventional method, and the raw material liquid was allowed to stand still to precipitate trub (removal step). In the removal step, it can be said that the liquid is consequently cooled by natural heat radiation. Thereafter, the raw material liquid was cooled (cooling step), fermentation with yeast was performed (fermentation process), and a process of storing and maturing the post-fermentation liquid (maturation process) was carried out to obtain a beer-taste beverage of Test Example 3-1 (color 6.3° EBC, BU 23.7, pH 4.4, alcohol content 5.0 v/v%).

### (Test Example 3-2)

A beer-taste beverage of Test Example 3-2 (color 6.2° EBC, BU 23.0, pH 4.4, alcohol content 5.0 v/v%) was obtained in the same manner as in Test Example 3-1, except that the heating process and the boiling process were changed as follows.

The raw material liquid (sugar-containing liquid) was transferred to a boiling kettle and heated until the temperature of the raw material liquid reached 100°C (heating process). Heating was immediately stopped, and the temperature of the raw material liquid was maintained at 98°C or higher and less than 100°C for 60 minutes (high-temperature holding step). Next, while maintaining the temperature of the raw material liquid at 95°C or higher and less than 100°C, nitrogen gas was bubbled into the raw material liquid at a flow rate of 0.0004 Nm³/h per 1 L of the raw material liquid (high-temperature bubbling step). The bubbling of nitrogen gas was performed using a bubbling unit connected to the end of a hose (transport unit) which was connected to a gas cylinder for supplying nitrogen gas (supply unit). The bubbling unit had a donut shape with a hollow portion and had 16 circular holes with a diameter of 0.3 to 0.4 mm at substantially equal intervals. The bubbling unit was placed in the raw material liquid so that the gas could be supplied throughout the boiling kettle. The high-temperature bubbling step was carried out for 90 minutes. Thereafter, the bubbling of nitrogen gas was stopped.

### (Test Example 3-3)

A beer-taste beverage of Test Example 3-3 (color 6.5° EBC, BU 25.3, pH 4.4, alcohol content 5.0 v/v%) was obtained in the same manner as in Test Example 3-2, except that air was bubbled instead of nitrogen gas in the high-temperature bubbling step.

### [Measurement of Color, Bitterness Unit (BU), and pH]

The color, bitterness unit (BU), pH, and alcohol content of the obtained beer-taste beverage were measured in the same manner as in Test Example 1.

### [Measurement of Aroma Component]

Aroma components contained in the obtained beer-taste beverage were measured in the same manner as in Test Example 1. The results are shown in Table 3.

### [Measurement of Malty flavor component]

Malty flavor components contained in the obtained beer-taste beverage were measured by the SPME-GC-MS method using a standard addition method. The results are shown in Table 3.

**[Table 3]**

| | Unit | Test Example 3-1 | Test Example 3-2 | Test Example 3-3 |
|---|---|---|---|---|
| | | Control | Bubbling (nitrogen gas) | Bubbling (air) |
| Humulene | µg/L | 0.01 | 0.01 | 0.01 |
| Myrcene | µg/L | 0.19 | 0.16 | 0.20 |
| Linalool | µg/L | 2.24 | 14.22 | 15.82 |
| Dimethyl sulfide (DMS) | µg/L | 16.6 | 22.5 | 21.4 |
| S-methylmethionine (SMM) | µg/L | 25.7 | 27.2 | 23.9 |
| Dimethyl sulfoxide (DMSO) | µg/L | 476.5 | 477.3 | 501.4 |
| Maltol | µg/kg | 443.40 | 452.23 | 472.70 |
| Furaneol | µg/kg | 258.16 | 233.24 | 223.83 |
| 2,5-dimethylpyrazine | µg/L | 1.09 | 1.51 | 1.44 |
| 2,6-dimethylpyrazine | µg/L | 1.26 | 2.51 | 2.36 |
| 2,3-dimethylpyrazine | µg/L | 3.15 | 6.19 | 8.24 |
| Guaiacol | µg/L | 2.96 | 2.94 | 3.70 |

As shown in Table 3, compared to the beer-taste beverage of Test Example 3-1 (control) in which a conventional boiling process was performed, the beer-taste beverages of Test Example 3-2 and Test Example 3-3, in which a boiling process including a high-temperature bubbling step of bubbling a gas (nitrogen gas or air) while maintaining the temperature below the boiling point and at a high temperature (95°C or higher and less than 100°C) was performed, had a slightly higher content of the hop-derived aroma component (linalool), and the content of aroma components related to off-flavors (dimethyl sulfide, S-methylmethionine, dimethyl sulfoxide) was at a comparable level. Note that the content of aroma components related to off-flavors was below the threshold value in all cases. From the results shown in Table 3, it can be understood that by performing the high-temperature bubbling step instead of boiling, the hop-derived aroma components were enhanced, and the aroma components related to off-flavors could be sufficiently volatilized.

Furthermore, as shown in Table 3, compared to the beer-taste beverage of Test Example 3-1 (control) in which a conventional boiling process was performed, the beer-taste beverages of Test Example 3-2 and Test Example 3-3, in which a boiling process including a high-temperature bubbling step of bubbling a gas (nitrogen gas or air) while maintaining the temperature below the boiling point and at a high temperature (95°C or higher and less than 100°C) was performed, showed a tendency for the content of malty flavor components (from maltol to guaiacol) to be higher. From the results shown in Table 3, it can be understood that by performing the high-temperature bubbling step instead of boiling, the content of malty flavor components can be increased, and a beer-taste beverage in which the malty flavor can be felt more strongly can be obtained.

The energy required for 90 minutes of boiling in the same equipment as in Test 3 (evaporation rate 6%) is approximately 830 MJ/batch. On the other hand, under the conditions of Test Example 3-2 and Test Example 3-3 (bubbling), an amount of energy equivalent to that required for 90 minutes of boiling can be reduced. When the energy required for the above 90 minutes of boiling is converted to a steam amount and then the CO₂ emission amount is calculated, it is 38.02 kg/batch. On the other hand, when the CO₂ emission amount is calculated from the usage amount of the gas (nitrogen gas or air) used for bubbling in the same equipment under the conditions of Test Example 3-2 and Test Example 3-3 (bubbling), the amounts are 0.495 kg/batch and 0.135 kg/batch, respectively, and the CO₂ reduction rates are calculated to be 98.7% and 99.6%, respectively.

### [Test Example 4: Production and Evaluation of Beer-Taste Beverage]

### (Test Example 4-1)

Using malt (malt usage ratio of 50% by mass or more), corn, starch, rice, and mashing water, production of a saccharified liquid (saccharification process) and lautering the saccharified liquid (wort lautering process) were carried out according to a conventional method to obtain a sugar-containing liquid. For the obtained sugar-containing liquid, a heating process and a boiling process were carried out as follows. Note that hops were added to the sugar-containing liquid immediately before the boiling process.

The raw material liquid (sugar-containing liquid) was transferred to a boiling kettle and heated until the temperature of the raw material liquid reached its boiling point (heating process). Heating was continued as is, and the temperature of the raw material liquid was maintained at the boiling point for 90 minutes (conventional boiling process).

For the obtained post-boiling liquid (sugar-containing liquid after boiling), heating was stopped according to a conventional method, and the raw material liquid was allowed to stand still to precipitate trub (removal step). In the removal step, it can be said that the liquid is consequently cooled by natural heat radiation. Thereafter, the raw material liquid was cooled (cooling step), fermentation with yeast was performed (fermentation process), and a process of storing and maturing the post-fermentation liquid (maturation process) was carried out to obtain a beer-taste beverage of Test Example 4-1 (color 9.5° EBC, BU 21.8, pH 4.3, alcohol content 4.9 v/v%).

### (Test Example 4-2)

A beer-taste beverage of Test Example 4-2 (color 9.8° EBC, BU 22.3, pH 4.3, alcohol content 4.9 v/v%) was obtained in the same manner as in Test Example 4-1, except that the heating process and the boiling process were changed as follows.

The raw material liquid (sugar-containing liquid) was transferred to a boiling kettle and heated until the temperature of the raw material liquid reached 100°C (heating process). Heating was immediately stopped, and the temperature of the raw material liquid was maintained at 98°C or higher and less than 100°C for 60 minutes (high-temperature holding step). Note that during the high-temperature holding step, if the temperature of the raw material liquid fell below 98°C, it was heated again, and when it reached 100°C, heating was stopped, and the temperature of the raw material liquid was maintained at 98°C or higher and less than 100°C. Next, while maintaining the temperature of the raw material liquid at 95°C or higher and less than 100°C, nitrogen gas was bubbled into the raw material liquid at a flow rate of 0.0003 Nm³/h (low flow rate) per 1 L of the raw material liquid (high-temperature bubbling step). The high-temperature bubbling step was carried out for 90 minutes. Note that during the high-temperature bubbling step, if the temperature of the raw material liquid fell below 95°C, it was heated again, and when it reached 100°C, heating was stopped, and the temperature of the raw material liquid was maintained at 95°C or higher and less than 100°C. Thereafter, the bubbling of nitrogen gas was stopped.

### (Test Example 4-3)

A beer-taste beverage of Test Example 4-3 (color 9.8° EBC, BU 20.9, pH 4.4, alcohol content 4.9 v/v%) was obtained in the same manner as in Test Example 4-2, except that the flow rate of nitrogen gas was changed to 0.0009 Nm³/h (medium flow rate) per 1 L of the raw material liquid in the high-temperature bubbling step.

### (Test Example 4-4)

A beer-taste beverage of Test Example 4-4 (color 10.0° EBC, BU 21.7, pH 4.3, alcohol content 4.9 v/v%) was obtained in the same manner as in Test Example 4-2, except that the flow rate of nitrogen gas was changed to 0.0027 Nm³/h (high flow rate) per 1 L of the raw material liquid in the high-temperature bubbling step.

### [Measurement of Color, Bitterness Unit (BU), and pH]

The color, bitterness unit (BU), pH, and alcohol content of the obtained beer-taste beverage were measured in the same manner as in Test Example 1.

### [Measurement of Aroma Component]

Aroma components contained in the obtained beer-taste beverage were measured in the same manner as in Test Example 1. The results are shown in Table 4.

### [Measurement of Malty flavor component]

Malty flavor components contained in the obtained beer-taste beverage were measured in the same manner as in Test Example 3. The results are shown in Table 4.

**[Table 4]**

| | Unit | Test Example 4-1 | Test Example 4-2 | Test Example 4-3 | Test Example 4-4 |
|---|---|---|---|---|---|
| | | Control | Bubbling (low flow rate) | Bubbling (medium flow rate) | Bubbling (high flow rate) |
| Myrcene | µg/L | 0.24 | 0.36 | 0.40 | 0.28 |
| Linalool | µg/L | 2.48 | 7.92 | 7.13 | 2.56 |
| Citronellol | µg/L | 2.98 | 4.09 | 4.43 | 3.10 |
| Geraniol | µg/L | 4.57 | 5.23 | 5.67 | 4.54 |
| Isobutyl isobutyrate | µg/L | 0.05 | 0.41 | 0.49 | 0.10 |
| Isoamyl isobutyrate | µg/L | 0.08 | 0.36 | 0.39 | 0.15 |
| 2-Methylbutyl isobutyrate | µg/L | 0.26 | 1.94 | 2.36 | 0.68 |
| Dimethyl sulfide (DMS) | µg/L | 10.8 | 11.6 | 15.3 | 11.4 |
| S-methylmethionine (SMM) | µg/L | 22.9 | 19.0 | 24.0 | 17.1 |
| Dimethyl sulfoxide (DMSO) | µg/L | 527.3 | 543.3 | 537.6 | 536.3 |
| Maltol | µg/kg | 1080.00 | 1170.00 | 1040.00 | 1090.00 |
| Furaneol | µg/kg | 281.74 | 303.09 | 278.82 | 294.29 |
| 2,5-dimethylpyrazine | µg/L | 0.87 | 1.09 | 1.03 | 0.78 |
| 2,6-dimethylpyrazine | µg/L | 1.17 | 1.81 | 1.60 | 1.09 |
| 2,3-dimethylpyrazine | µg/L | 2.54 | 3.54 | 3.15 | 2.30 |
| Guaiacol | µg/L | 2.38 | 2.58 | 2.42 | 2.71 |

As shown in Table 4, compared to the beer-taste beverage of Test Example 4-1 (control) in which a conventional boiling process was performed, the beer-taste beverages of Test Examples 4-2 to 4-4, in which a boiling process including a high-temperature bubbling step of bubbling a gas (nitrogen gas or air) while maintaining the temperature below the boiling point and at a high temperature (95°C or higher and less than 100°C) was performed, had a comparable or slightly higher content of hop-derived aroma components (from myrcene to 2-methylbutyl isobutyrate) and malty flavor components (from maltol to guaiacol), and the content of aroma components related to off-flavors (dimethyl sulfide, S-methylmethionine, dimethyl sulfoxide) was at a comparable level. Note that the content of aroma components related to off-flavors was below the threshold value in all cases. From the results shown in Table 4, it can be understood that by performing the high-temperature bubbling step instead of boiling, in the beer-taste beverages of Test Examples 4-2 to 4-3, the hop-derived aroma components and malty flavor components were enhanced, and the aroma components related to off-flavors could be sufficiently volatilized. Furthermore, in the beer-taste beverage of Test Example 4-4, the hop-derived aroma components, malty flavor components, and aroma components related to off-flavors could be sufficiently volatilized.

## Claims

1. A method for producing a beer-taste beverage, comprising:
at least a boiling process,
wherein the boiling process comprises bubbling a gas through a raw material liquid while maintaining the temperature of the raw material liquid below its boiling point.

2. The method according to claim 1, wherein the gas is at least one selected from the group consisting of an inert gas and air.

3. The method according to claim 1, wherein the gas is at least one selected from the group consisting of nitrogen gas, carbon dioxide gas, argon gas, helium gas, neon gas, and air.

4. The method according to claim 1 or 2, wherein a flow rate of the gas is between 0.0003 Nm³/h and 0.0027 Nm³/h per 1 L of the raw material liquid.

5. The method according to claim 1 or 2, wherein the boiling process further comprises maintaining the temperature of the raw material liquid below its boiling point without bubbling a gas.

6. The method according to claim 1 or 2, wherein the raw material liquid is wort.

7. The method according to claim 1 or 2, further comprising, after the boiling process, a fermentation process of fermenting a pre-fermentation liquid with yeast.

8. The method according to claim 1 or 2, wherein the gas is supplied into the raw material liquid through one or more holes having a diameter of 1.0 mm or less.
